# EUROPÄISCHE PATENTSCHRIFT

(11) **EP 3 683 568 B1**
(45) Veröffentlichungstag und Bekanntmachung des Hinweises auf die Patenterteilung: **09.03.2022**
(21) Anmeldenummer: 20150790.2
(22) Anmeldetag: 08.01.2020
(51) Int. Cl.: G01N 21/3563, G01N 21/359, G01N 21/27, G01N 21/84

(54) **VERFAHREN ZUR UNTERSCHEIDUNG VON MINERALWOLLEN UND SYSTEM ZUR UNTERSCHEIDUNG VON MINERALWOLLEN**
METHOD FOR DISTINGUISHING MINERAL WOOLS AND SYSTEM FOR DISTINGUISHING MINERAL WOOLS
PROCÉDÉ DE DIFFÉRENCIATION DES LAINES MINÉRALES ET SYSTÈME DE DIFFÉRENCIATION DES LAINES MINÉRALES

(30) Priorität: 17.01.2019 DE 102019101206
(43) Veröffentlichungstag der Anmeldung: 22.07.2020
(73) Patentinhaber: Bundesrepublik Deutschland, vertreten durch den Bundesminister für Wirtschaft und Energie, dieser vertreten durch den Präsidenten der, 12205 Berlin (DE)
(72) Erfinder: PAUL, Dr., Andrea, 15566 Schöneiche (DE); OSTERMANN, Dr., Markus, 12459 Berlin (DE); HÄNEL, Matthias, 13355 Berlin (DE)
(74) Vertreter: Zimmermann & Partner Patentanwälte mbB

(56) Entgegenhaltungen:
- WO-A1-98/50783
- WO-A2-2007/097955
- AT-A4- 504 893
- Broszies, Tanja: "Masterarbeit: Untersuchung zur Anwendung der Nahinfrarot-Spektroskopie fuer die Differenzierung von Glas- und Steinwolle", 6. Juli 2017 (2017-07-06), TU Berlin, Fachgebiet Bauphysik und Baukonstruktionen in Kooperation mit der Bundesanstalt fuer Materialforschung und -pruefung (BAM), Berlin, Germany, XP009520286, * Zusammenfassung * * Kapitel 2.4 bis Kapitel 5 *
- Frank U Vogdt ET AL: "LifeCycle KMF Optimierung der Stoffströme im Lebenszyklus von Bauprodukten aus künstlichen Mineralfaserdämmstoffen", , 17. September 2019 (2019-09-17), XP055692490, Gefunden im Internet: URL:https://www.irbnet.de/daten/rswb/19089 007731.pdf [gefunden am 2020-05-07]
- Roland Grimm: "Was ist der Unterschied zwischen Glas- und Steinwolle?", , 5. November 2013 (2013-11-05), XP055692473, Gefunden im Internet: URL:https://www.baustoffwissen.de/baustoff e/baustoffknowhow/daemmstoffe/unterschied- glaswolle-steinwolle/ [gefunden am 2020-05-07]
- LJUNGDAHL G ET AL: "Infrared optical constants of mineral wool raw materials", JOURNAL OF NON-CRYSTALLINE SOLIDS, NORTH-HOLLAND PHYSICS PUBLISHING. AMSTERDAM, NL, Bd. 136, Nr. 1-2, Dezember 1991 (1991-12), Seiten 137-150, XP024058378, ISSN: 0022-3093, DOI: 10.1016/0022-3093(91)90129-T [gefunden am 1991-12-01]

## Beschreibung

### Gebiet der Erfindung

Die Erfindung betrifft ein Verfahren zur Unterscheidung von Mineralwollen und ein System zur Unterscheidung von Mineralwollen und liegt insbesondere auf dem Gebiet der analytischen Chemie und der Werkstoffprüfung.

### Stand der Technik

Anorganische Fasern aus Glaswolle und Steinwolle sind optisch nicht einfach zu unterscheiden. Als Werkstoff in der Bauindustrie werden sie oft als Dämmmaterial verwendet. Bei Sanierungen ist nicht mehr zu unterscheiden, um welche Art von Mineralwolle es sich handelt. Das ist problematisch, da unterschiedliche Anforderungen an die Entsorgung von Glaswollen und Steinwolle gegeben sind.

Der Artikel von Roland Grimm: "Was ist der Unterschied zwischen Glas- und Steinwolle?" vom 5. November 2013 (URL:https://www.baustoffwissen.de/baustoffe/ baustoffknowhow/daemmstoffe/unterschied-glaswolle-steinwolle/) beschreibt Schwierigkeiten bei der Unterschiedung von Glas- und Steinwolle.

LJUNGDAHL G ET AL: "Infrared optical constants of mineral wool raw materials", JOURNAL OF NON-CRYSTALLINE SOLIDS, NORTH-HOLLAND PHYSICS PUBLISHING. AMSTERDAM, NL, Bd. 136, Nr. 1-2, Dezember 1991, Seiten 137-150, ISSN: 0022-3093, beschreibt die Aufnahme von NIR-Spektren verschiedener Glasmaterialien, aus denen Fasern hergestellt werden.

Die Druckschrift WO 2007/097955 A2 beschreibt ein Verfahren und ein System zur nicht-invasiven Charakterisierung eines Gemisches aus Glasfasern und Bindemittel unter Verwendung von VIS-NIR-Spektroskopie und multivariater Datenanalyse.

Die Druckschrift WO 98/50783 A1 beschreibt ein Verfahren zur Bestimmung des Bindemittel-Gehalts eines Mineralfaser-Produkts unter Verwendung von Infrarot-Spektroskopie und multivariater Datenanalyse.

Die Druckschrift AT 504 893 A4 beschreibt ein Verfahren zur Bestimmung der Zusammensetzung von Faserstoffgemischen, das auf einer probenschonenden, chemikalienfreien und online-tauglichen Messung von NIR-Spektren im Wellenlängenbereich zwischen 1100 nm und 2500 nm und auf der nachfolgenden chemometrischen Auswertung mittels multivariater Statistik beruht.

### Offenbarung der Erfindung

Es wird ein Verfahren zur Unterscheidung von Mineralwollen, insbesondere Glaswolle und Steinwolle, vorgeschlagen. Das Verfahren umfasst die folgenden Schritte: Bereitstellen von Nah-Infrarot-Spektren (NIR Spektren) von Glaswolle und Steinwolle als Kalibrierspektren; Bereitstellen einer Probe, die eine Glaswolle oder eine Steinwolle aufweist; Erstellen eines NIR Spektrums der Probe; Definieren eines Entscheidungskriteriums zu Zuordnung der Probe als Glaswolle oder als Steinwolle; computergestütztes Bestimmen des Entscheidungskriteriums durch ein multivariates Verfahren mit den Einträgen in dem NIR Spektrum der Probe und den NIR Spektren als Kalibrierspektren.

Glaswolle besteht aus Glas und weiten Zusatzstoffen, wie zum Beispiel Bindemitteln. Steinwolle besteht aus Gestein, wie beispielsweise Spat, Dolomit, Basalt, Diabas, Anorthosit und weiteren Zusatzstoffen. Die beiden Mineralwollen unterscheiden sich unter anderem durch unterschiedliche Molekülgruppen, die mit Hilfe eines Nah-Infrarot-Spektrometers (oder Nah-Infrarot-Sensors) durch unterschiedliche Absorptionseigenschaften bestimmbar sind.

Das Prinzip eines Nah-Infrarot-Spektrometers ist hinreichend bekannt. Durch Anregung entstehen in einer Probe Molekül-Schwingungen. Je nachdem, um welche Molekülgruppen es sich in der Probe handelt, wird Strahlung unterschiedliche stark reflektiert beziehungsweise absorbiert. Die Strahlung wird wellenlängenabhängig detektiert. In einem NIR Spektrum sind unterschiedliche Bereiche sichtbar, die hauptsächlich mit den Oberton- und Kombinationsschwingungen von Molekülgruppen identifizierbar sind. Ein NIR-Spektrum ist charakteristisch für die Probe. Aufgrund der Komplexität der Spektren durch sich überlagernden Banden verschiedener Molekülschwingungen ist jedoch eine Quantifizierung von Inhaltsstoffen und teilweise auch die Zuordnung von Spektren zu bestimmten Materialien in der Regel nicht ohne Weiteres nicht möglich.

Die NIR Spektren sind gemäß typischer Ausführungsformen in Energiekanäle (oder Wellenzahlkanäle oder Wellenlängenkanäle) eingeteilt und stellen die Intensität je Kanal dar (Einträge). Je nach Auflösung kann ein einzelnes NIR Spektrum mehrere hundert oder noch mehr Einträge, also Zahlenpaare, umfassen, was zu einer großen Datenmenge führt.

Ein Nah-Infrarot-Spektrum umfasst beispielsweise den Teil des elektromagnetischen Spektrums mit Wellenlängen größer als sichtbares Licht, also ab etwa 780 nm bis beispielsweise 3000 nm. Das Nah-Infrarot-Spektrum kann die Intensität der Transmission, Absorption oder Reflexion in Abhängigkeit von der Wellenlänge oder der Wellenzahl beschreiben. Besonders relevant für das vorgeschlagene Verfahren ist beispielsweise der Wellenlängenbereich von etwa 800 nm bis etwa 2500 nm bzw. der Wellenzahlbereich von 12500 cm⁻¹ bis 4000 cm⁻¹.

Gemäß einer Ausführungsform umfasst das NIR Spektrum der Probe mindestens den Spektralbereich von etwa 4200 cm⁻¹ bis 6200 cm⁻¹ und insbesondere von mindestens 4200 cm⁻¹ bis 8000 cm⁻¹. Je mehr charakteristische Oberton- bzw. Kombinationsschwingungen der Molekülgrundschwingung von dem Spektralbereich umfasst sind, desto genauer kann das Verfahren das Entscheidungskriterium bestimmen.

Die Nah-Infrarot-Spektren (NIR Spektren) von Glaswolle und von Steinwolle als Kalibrierspektren können in derselben Form wie das erstellte NIR Spektrums der Probe vorliegen. Insbesondere können die Kalibrierspektren in derselben Messgeometrie (Anregung, Reflexionsmodus oder Transmissionsmodus, Detektor) und mit derselben Energieauflösung vorliegen. Vorteilhaft sind die Kalibrierspektren sogar mit demselben Spektrometer aufgenommen. Alternativ oder zusätzlich kann eine Datenvorbehandlung nötig sein, die die einzelnen Spektren normiert und auf ihre Varianz skaliert.

Die Kalibrierspektren weisen typischerweise eine klare Eigenschaft auf, nämlich dass sie entweder einer Glaswolle oder einer Steinwolle entsprechen.

Gemäß einer Ausführungsform wird das NIR-Spektrum der Probe unter diffuser Reflexion erstellt. Die diffuse Reflexion ist für stark streuende Proben, wie Mineralwollen, gut geeignet. Dabei ist der optische Weg durch oder an der Probe undefiniert. Gemäß einer Weiterentwicklung werden von der Probe mindestens 5 NIR Spektren bestimmt und ein gemitteltes Spektrum bestimmt, das zum computergestützten Bestimmen des Entscheidungskriteriums durch ein multivariates Verfahren verwendet wird.

Das Entscheidungskriterium kann gemäß einer Ausführungsform jeweils eine unabhängige Variable für die Gruppen "Steinwolle" und "Glaswolle" umfassen. Beispielswiese wird das Entscheidungskriterium definiert mit den Variablen A und B, wobei ein Wert von A = 0 die Aussage "keine Glaswolle" und ein Wert von A = 1 die Aussage "Glaswolle" umfasst; und wobei ein Wert von B = 0 die Aussage "keine Steinwolle" und ein Wert von B = 1 die Aussage "Steinwolle" umfasst. Ein Wert nahe 1 für A oder B kann die Zuordnung definieren. Ein Entscheidungskriterium kann beispielsweise die Über- oder Unterschreitung des Wertes "0,5" sein, wobei dann jeweils die über die 5 Einzelspektren zu ermittelnde Standardabweichung (sd) zu berücksichtigen ist: Wenn A+sd > 0,5 ist, dann erfolgt die Zuordnung "Glaswolle" und entsprechend für A+sd < 0,5 zu "keine Glaswolle". Es kann Proben beziehungsweise NIR-Spektren geben, für die eine Zuordnung nicht möglich ist, beispielsweise wenn beide Werte A und B identisch sind. Dies kann durch Messungenauigkeiten oder der Beschaffenheit der Probe bedingt sein, die in diesem Fall Anteile beide Materialien enthält. Es ist offensichtlich, dass das Verfahren durch die Messgenauigkeit und unbestimmbare Einflüsse begrenzt ist. Die Variablen A und B sind unabhängig voneinander und können getrennt voneinander bestimmt werden. Durch die Bestimmung beider Variablen wird das Ergebnis sicherer.

Das multivariate Verfahren kann eine Diskriminanzanalyse umfassen, wobei das Entscheidungskriterium eine Gruppenzuordnung der Diskriminanzanalyse ist. Eine Diskriminanzanalyse umfasst die Unterscheidung von Gruppen und die Zuordnung einer unbekannten Probe zu einer Gruppe. Als Grundlage zur Definition der Gruppen werden die Kalibrierspektren verwendet. Gemäß einer Weiterentwicklung umfasst die Diskriminanzanalyse genau zwei Gruppen, nämlich Steinwolle und Glaswolle.

Durch eine Diskriminanzanalyse beispielsweise in Kombination mit einer multivariaten Auswertung (Partial Least Squares Discriminant Analysis , PLS-DA) können Muster in den Kalibrierspektren gefunden werden, die einer Glaswolle oder einer Steinwolle zugeordnet werden können. Dies kann nötig sein, um die große Datenmenge der Einträge in den Kalibrierspektren und dem NIR Spektrum der Probe zu reduzieren.

Es gibt Alternativen zur Diskriminanzanalyse oder Mischformen mit dieser. Gemäß einer weiteren Ausführungsform umfasst das multivariate Verfahren eine Clusteranalyse (Clustering-Algorithmen) oder eine Hauptkomponentenanalyse (Principal Component Analysis, PCA) zur Reduzierung der umfangreichen Datenmengen aus den Kalibrierspektren und dem Spektrum der Probe. Dabei werden Hauptkomponenten in den Spektren gesucht, die möglichst repräsentativ für die Eigenschaft "Glaswolle" oder "Steinwolle" sind. Die unbekannte Probe wird dann auf diese Hauptkomponenten hin untersucht.

Gemäß einer weiteren Ausführungsform basiert das multivariate Verfahren auf einer Support Vector Machine Klassifizierung (SVM, SVR) oder sonstigem Algorithmus des maschinellen Lernens wobei z.B. auch neuronale Netze trainiert werden können.

Vor Beginn des multivariaten Verfahrens kann eine Vorbehandlung der Spektren durchgeführt werden. Die Vorbehandlung kann beispielsweise die Transformation von Reflexions- in Absorptions oder Transmissionsspektren, Mittenzentrierung, Standardisieren, Glätten, Ableiten, lineare oder polynombasierte Untergrundkorrektor, Glättungen, Normieren, Standard-Normal-Variate Transformationen (SNV), Multiple-Scatter-Transformationen, Bereichsselektion, Wichtungen, Mittlungen von Spektren und/oder das Ausgleichen einer Energieverschiebung umfassen.

Es wird weiterhin ein System zur Unterscheidung von Mineralwolle, insbesondere Glaswolle und Steinwolle, vorgeschlagen. Das System umfassend ein Nah-Infrarot-Spektrometer, eine Recheneinheit und einen Speicher, wobei das Nah-Infrarot-Spektrometer eingerichtet ist, ein NIR Spektrum einer Probe zu erstellen und auf dem Speicher abzulegen, wobei NIR Spektren auf dem Speicher abgelegt sind, und die Recheneinheit und der Speicher eingerichtet sind, das hierin beschriebene Verfahren auszuführen.

Das System kann vorteilhaft tragbar sein und eine interne Stromversorgung, insbesondere einen Akku, aufweisen. Solche Systeme werden auch mobile Kompaktspektrometer, Feldgeräte, oder Handhelds genannt. Mit einem solchen System sind Messungen vor Ort, beispielsweise Messungen von Dämmmaterialien auf Baustellen möglich.

Das System kann weiterhin eine optische Ausgabevorrichtung, insbesondere ein Display, aufweisen, das eingerichtet ist, einem Benutzer das Entscheidungskriterium zu visualisieren. Vorteilhaft gibt die Ausgabevorrichtung keine komplexen Berechnungen aus, sondern visualisiert einem Benutzer direkt, um welche Mineralwolle es sich handelt. Entsprechend kann das Verfahren daher aufweisen: Visualisieren des bestimmten Entscheidungskriteriums für einen Benutzer.

### Beispiele

Weitere Vorteile und Merkmale bevorzugter Ausführungsformen der Erfindung werden nachfolgend anhand von Beispielen erläutert.

Das Verfahren wurde in den hier gezeigten Beispielen mit einem NIR-Spektrometer (Matrix-F, Bruker ^{©}) im Reflexionsmodus bei diffuser Reflexion unter Verwendung einer Reflexionssonde durchgeführt. Der Messbereich ist von 15,000-4,000 cm⁻¹ gewählt mit einer Auflösung (Resolution) von 16 cm⁻¹. Es wurden 64 Einzelmessungen zu einem Gesamtspektrum der Probe gemittelt. Grundsätzlich ist jedes NIR-Spektrometer im Reflexionsmodus, unabhängig, ob es sich dabei um eine Reflexionssonde oder Ulbricht-Kugel oder anderes handelt, für das erfindungsgemäße Erstellen eines NIR Spektrums der Probe geeignet.

Es wurden 30 Proben untersucht und mit P1 bis P30 bezeichnet. Zur Messung einer Probe werden 5 Probenstücke von ca. 10 x 10 mm Kantenlänge untersucht.

Jedes dieser Probenstücke wird insgesamt 5fach gemessen. Die Mittelwertspektren aus den 5 Wiederholungsmessungen und Probenstücken werden verwendet.

Erfindungsgemäß werden Nah-Infrarot-Spektren (NIR Spektren) von Glaswolle und Steinwolle als Kalibrierspektren bereitgestellt. Vorteilhaft sollten für eine möglichst genaue Kalibrierung repräsentative NIR Spektren von beispielsweise jeweils mindestens 6, insbesondere mindestens 10, charakteristischen Proben der Typen Glaswolle bzw. Steinwolle bereitgestellt werden.

Die Kalibrierspektren und die bestimmten Mittelwertspektren werden zunächst einer Datenvorbehandlung unterzogen, diese umfasst: eine Mittenzentrierung sowie eine Wichtung. Dabei werden mögliche unterschiedliche Einheiten und Varianzen ausgeglichen, indem die Daten jeweils zu ihrer Standardabweichung skaliert werden. Bei der Verwendung von Spektrometern, deren Performance nicht identisch zu dem hier eingesetzten Gerät ist und bei der Verwendung alternativer multivariater Verfahren können Modifikationen der Datenvorbehandlung wie z.B. Wichtungen, spektroskopische Transformationen, Ableitungen etc. sinnvoll sein. Grundsätzlich handelt es sich in den NIR Spektren jedoch um eindeutige Unterschiede bei den vorliegenden Schwingungen für die unterschiedlichen Mineralwollen in den Proben.

Das in dieser Ausführungsform verwendete multivariate Verfahren umfasst ein Partial Least Squares Regression mit einer Diskriminanzanalyse (PLS-DA Modell). Dazu werden in der Kalibrierung mit den Kalibrierspektren den verschiedenen Typen der Mineralwolle unterschiedliche Klassifizierungen im Bereich einer Y-Variablen (0,1) zugeordnet, die bei dem Entscheidungskriterium zur Anzeige der Klasse dienen (1=Treffer, 0=kein Treffer). Bei der Kalibrierung ist die Variable für die Klassen Glaswolle und Steinwolle bekannt, nämlich jeweils Y1=1 und Y2=0 oder Y1=0 und Y2=1. Bei der PLSR-DA dienen die jeweiligen Zahlenpaare aus Intensität je Wellenzahl-Kanal der Kalibrierspektren als Eingangswerte. Das multivariate Verfahren ist computergestützt, da die Datenmenge erheblich groß ist.

Mithilfe des erstellten PLSR-DA Modells können Spektren der unbekannten Proben klassifiziert werden. Die Klasse eines NIR Spektrums einer Probe ist eine Variable, die durch das computergestützte multivariate Verfahren bestimmt wird. Beispielsweise gilt ein Klassifizierungswert > 0.5, insbesondere 1, oder> 1 als "Treffer" des Entscheidungskriteriums und Werte <0 bis 0.5 als "nicht zugeordnet". Bei Werten von 0.5 ± Standardabweichung (ermittelt aus 3-7 Wiederholungsmessungen) müssen Plausibilitätsbetrachtungen bzw. eine Sichtung der Spektren mit gegebenenfalls erneuter Messung erfolgen. Das Entscheidungskriterium zu Zuordnung der Probe als Glaswolle oder als Steinwolle heißt dann: "Glaswolle" wenn Y1-Wert zwischen 0.5 und ≥ 1 und "Steinwolle" wenn Y2-Wert zwischen 0.5 und ≥ 1 liegt.

Die Variablen Y1-Glas und Y2-Stein können unabhängig voneinander oder in einer Rechenoperation bestimmt werden. Es kann daher sein, dass eine Probe weder das Kriterium der einen noch der anderen erfüllt. Dann handelt es sich vermutlich um ein Fabrikat aus unbekanntem Material bzw. um eine stark verunreinigte Wolle. Andersherum, ein NIR Spektrum erfüllt beide Kriterien bzw. die Vorhersagewerde für Y1 und Y2 liegen nahe bei 0.5. In diesen Fällen kann das NIR Spektrum der Probe keine sichere Aussage für das Entscheidungskriterium liefern und eine Mischprobe wird vermutet.

Das computergestützte Bestimmen des Entscheidungskriteriums durch das multivariate Verfahren mit den Einträgen in dem NIR Spektrum der Probe und den NIR Spektren als Kalibrierspektren kann mit jeder Software mit entsprechenden statistischen und mathematischen Möglichkeiten bzw. entsprechende Module von Programmiersprachen wie z.B. R , Matlab, Python und Spektrometer-integrierte Software (z.B. OPUS bei Bruker Geräten) etc. durchgeführt werden.

Weiterhin besteht die Möglichkeit, anstelle der PLS-DA ein alternatives chemometrisches Verfahren wie z.B. eine Clusteranalyse (z.B. WARDS Algorithmus mit quadriertem Euklidischen Abstand), Hauptkomponentenanalyse (PCA Projektion) oder Support Vector Machines Klassifizierung (SVM) für die multivariate Analyse der NIR Spektren zu verwenden. Gemäß einer Alternative können ebenfalls Algorithmen des maschinellen Lernens wie z.B. neuronale Netze verwendet werden.

Tabelle 1 zeigt die Ergebnisse der PLSR-DA mit dem oben beschriebenen Entscheidungskriterium für 30 Proben mit bekannter Zusammensetzung (Validierung).

**Tabelle 1**

| **Probe** | **Mineralwolle** | **Y1 - "Glas"** | **Y2 - "Stein"** |
|---|---|---|---|
| **P1** | **Steinwolle** | **-0,3** | **1,3** |
| **P2** | **Glaswolle** | **0,8** | **0,2** |
| **P3** | **Steinwolle** | **-0,3** | **1,3** |
| **P4** | **Glaswolle** | **1,2** | **-0,2** |
| **P5** | **Steinwolle** | **-0,1** | **1,1** |
| **P6** | **Steinwolle** | **-0,3** | **1,3** |
| **P7** | **Glaswolle** | **0,7** | **0,3** |
| **P8** | **Steinwolle** | **-0,1** | **1,1** |
| **P9** | **Steinwolle** | **0,3** | **0,7** |
| **P10** | **Glaswolle** | **0,9** | **0,1** |
| **P11** | **Steinwolle** | **0,4** | **0,6** |
| **P12** | **Glaswolle** | **0,9** | **0,1** |
| **P13** | **Steinwolle** | **0,3** | **0,7** |
| **P14** | **Steinwolle** | **0,1** | **0,9** |
| **P15** | **Steinwolle** | **-0,4** | **1,4** |
| **P16** | **Steinwolle** | **0,2** | **0,8** |
| **P17** | **unbekannt** | **0,0** | **1,0** |
| **P18** | **Glaswolle** | **0,7** | **0,3** |
| **P19** | **Steinwolle** | **-0,3** | **1,3** |
| **P20** | **Steinwolle** | **-0,4** | **1,4** |
| **P21** | **Steinwolle** | **-0,5** | **1,5** |
| **P22** | **Glaswolle** | **0,8** | **0,2** |
| **P23** | **Glaswolle** | **1,0** | **0,0** |
| **P24** | **Glaswolle** | **0,9** | **0,1** |
| **P26** | **Glaswolle** | **0,9** | **0,1** |
| **P27** | **Steinwolle** | **-0,3** | **1,3** |
| **P28** | **Glaswolle** | **1,1** | **-0,1** |
| **P29** | **Glaswolle** | **0,9** | **0,1** |
| **P30** | **Glaswolle** | **0,9** | **0,1** |

Alle Proben erfüllen jeweils genau eines der Kriterien Y1-"Glas" oder Y2-"Stein". Dadurch ist eine Zuordnung eindeutig möglich, im Falle von Probe 11 kann das Vorliegen größerer Anteile Glaswolle in der Steinwolle-Probe vermutet werden.

Die unbekannte Probe 17 wurde als Steinwolle eindeutig identifiziert. In den hier vorgestellten erfindungsgemäßen Beispielen werden keine falschen Zuordnungen getätigt.

## Patentansprüche

1. Verfahren zur Unterscheidung von Mineralwollen mit den folgenden Schritten:
- Bereitstellen von Nah-Infrarot-Spektren, "NIR-Spektren", von Glaswolle und Steinwolle als Kalibrierspektren;
- Bereitstellen einer Probe, die eine Glaswolle oder eine Steinwolle aufweist;
- Erstellen eines NIR-Spektrums der Probe;
- Definieren eines Entscheidungskriteriums zur Zuordnung der Probe als Glaswolle oder als Steinwolle;
- computergestütztes Bestimmen des Entscheidungskriteriums durch ein multivariates Verfahren mit den Einträgen in dem NIR-Spektrum der Probe und den NIR-Spektren als Kalibrierspektren.

2. Verfahren nach Anspruch 1, wobei das NIR-Spektrum der Probe mindestens den Spektralbereich von etwa 4200 cm⁻¹ bis 6200 cm⁻¹ umfasst.

3. Verfahren nach einem der vorherigen Ansprüche, wobei das multivariate Verfahren eine Diskriminanzanalyse umfasst und das Entscheidungskriterium eine Gruppenzuordnung der Diskriminanzanalyse ist.

4. Verfahren nach Anspruch 3, wobei die Diskriminanzanalyse genau zwei Gruppen umfasst und die beiden Gruppen Steinwolle und Glaswolle sind.

5. Verfahren nach einem der vorherigen Ansprüche, wobei das Entscheidungskriterium jeweils eine unabhängige Variable für die Gruppen Steinwolle und Glaswolle umfasst.

6. Verfahren nach Anspruch 1 oder 2, wobei das multivariate Verfahren eine Clusteranalyse oder eine Hauptkomponentenanalyse, "PCA", umfasst.

7. Verfahren nach Anspruch 1 oder 2, wobei das multivariate Verfahren auf einer Support-Vector-Machine-Klassifizierung, "SVM", "SVR", oder einem sonstigem Algorithmus des maschinellen Lernens basiert.

8. Verfahren nach einem der vorherigen Ansprüche, wobei das computergestützte Bestimmen des Entscheidungskriteriums eine Diskriminanzanalyse, insbesondere eine Partial-Least-Squares-Diskriminanzanalyse, "PLS-DA", umfasst.

9. System zur Unterscheidung von Mineralwollen, umfassend ein Nah-Infrarot-Spektrometer, eine Recheneinheit und einen Speicher, wobei das Nah-Infrarot-Spektrometer eingerichtet ist, ein NIR-Spektrum einer Probe zu erstellen und auf dem Speicher abzulegen, wobei NIR-Spektren auf dem Speicher abgelegt sind, und wobei das Nah-Infrarot-Spektrometer, die Recheneinheit und der Speicher eingerichtet sind, das Verfahren nach einem der Ansprüche 1 bis 8 auszuführen.

10. System nach Anspruch 9, wobei das System tragbar ist und eine interne Stromversorgung aufweist.

11. System nach einem der Ansprüche 9 oder 10, weiterhin aufweisend eine optische Ausgabevorrichtung, insbesondere ein Display, das eingerichtet ist, einem Benutzer das Entscheidungskriterium zu visualisieren.

## Claims

1. A method for distinguishing mineral wools, comprising the following steps:
- providing near infrared spectra (NIR spectra) of glass wool and rock wool as calibration spectra;
- providing a sample that comprises glass wool or rock wool;
- creating an NIR spectrum of the sample;
- defining a decision-making criterion for classifying the sample as glass wool or as rock wool; and
- determining, in a computer-assisted manner, the decision-making criterion by way of a multivariate method using the entries in the NIR spectrum of the sample and the NIR spectra as calibration spectra.

2. The method according to claim 1, wherein the NIR spectrum of the sample encompasses at least the spectral range of approximately 4200 cm⁻¹ to 6200 cm⁻¹.

3. A method according to any one of the preceding claims, wherein the multivariate method comprises a discriminant analysis, and the decision-making criterion is a group classification of the discriminant analysis.

4. The method according to claim 3, wherein the discriminant analysis comprises exactly two groups, and the two groups are rock wool and glass wool.

5. A method according to any one of the preceding claims, wherein the decision-making criterion in each case comprises an independent variable for the groups rock wool and glass wool.

6. The method according to claim 1 or 2, wherein the multivariate method comprises a cluster analysis or a principal component analysis (PCA).

7. The method according to claim 1 or 2, wherein the multivariate method is based on a support vector machine (SVM), classification, "SVR" or another algorithm of machine learning.

8. A method according to any one of the preceding claims, wherein the computer-assisted determination of the decision-making criterion comprises a discriminant analysis, in particular a partial least squares discriminant analysis (PLS-DA).

9. A system for distinguishing mineral wools, comprising a near infrared spectrometer, a processing unit and a memory, the near infrared spectrometer being configured to create an NIR spectrum of a sample and store this on the memory, NIR spectra being stored on the memory, and the near infrared spectrometer, the processing unit and the memory being configured to carry out the method according to any one of claims 1 to 8.

10. The system according to claim 9, wherein the system is portable and includes an internal power supply unit.

11. The system according to either claim 9 or 10, furthermore comprising an optical output device, in particular a display, which is configured to visualize the decision-making criterion to a user.

## Revendications

1. Procédé de différenciation de laines minérales avec les étapes suivantes :
- fourniture de spectres dans le proche infrarouge « spectres NIR », de laine de verre et laine de roche comme spectres d'étalonnage ;
- fourniture d'un échantillon comprenant de la laine de verre ou de la laine de roche ;
- création d'un spectre NIR de l'échantillon ;
- définition d'un critère de décision pour la classification de l'échantillon comme laine de verre ou comme laine de roche ;
- détermination assistée par ordinateur du critère de décision par un procédé multivarié avec les entrées dans le spectre NIR de l'échantillon et les spectres NIR comme spectres d'étalonnage.

2. Procédé selon la revendication 1, dans lequel le spectre NIR de l'échantillon comprend le domaine spectral d'environ 4200 cm⁻¹ à 6200 cm⁻¹.

3. Procédé selon l'une des revendications précédentes, dans lequel le procédé multivarié comprend une analyse discriminatoire et le critère de décision est une classification en groupes de l'analyse discriminatoire.

4. Procédé selon la revendication 3, dans lequel l'analyse discriminatoire comprend exactement deux groupes et les deux groupes sont la laine de roche et la laine de verre.

5. Procédé selon l'une des revendications précédentes, dans lequel le critère de décision comprend respectivement une variable indépendante pour les groupes laine de roche et laine de verre.

6. Procédé selon la revendication 1 ou 2, dans lequel le procédé multivarié comprend une analyse de cluster et une analyse de composant principal « PCA ».

7. Procédé selon la revendication 1 ou 2, dans lequel le procédé multivarié est basé sur une classification de machine à vecteurs de support, « SVM », « SVR », ou un autre algorithme d'apprentissage de machine.

8. Procédé selon l'une des revendications précédentes, dans lequel la détermination assistée par ordinateur du critère de décision comprend une analyse discriminatoire, plus particulièrement une analyse discriminatoire partielle par les moindres carrés « PLS-DA ».

9. Système de différenciation de laines minérales, comprenant un spectromètre dans le proche infrarouge, une unité de calcul et une mémoire, dans lequel le spectromètre dans le proche infrarouge est conçu pour établir un spectre NIR d'un échantillon et l'enregistrer sur la mémoire, dans lequel les spectres NIR sont enregistrés sur la mémoire et dans lequel le spectromètre dans le proche infrarouge, l'unité de calcul et la mémoire sont conçus pour exécuter le procédé selon l'une des revendications 1 à 8.

10. Système selon la revendication 9, dans lequel le système est portatif et comprend une alimentation électrique interne.

11. Système selon l'une des revendications 9 ou 10, comprenant en outre un dispositif de sortie optique, en particulier un écran, qui est conçu pour permettre à l'utilisateur de visualiser le critère de décision.
